(19) Europäisches Patentamt
European Patent Office
Office européen des brevets

(11) EP 2 222 043 A2

(12) EUROPEAN PATENT APPLICATION

(43) Date of publication:
25.08.2010 Bulletin 2010/34

(51) Int Cl.:
H04L 27/34 (2006.01) H04L 27/04 (2006.01)

(21) Application number: 10152383.5

(22) Date of filing: 02.02.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 23.02.2009 CN 200910078449

(71) Applicant: Huawei Technologies Co., Ltd.
Longgang District, Shenzhen
Guangdong 518129 (CN)

(72) Inventors:
• Wang, Yi
518129, Shenzhen Guangdong (CN)
• Zhang, Jiayin
518129, Shenzhen Guangdong (CN)
• Chen, Dageng
518129, Shenzhen Guangdong (CN)
• Bi, Xiaoyan
518129, Shenzhen Guangdong (CN)

(74) Representative: Reinhard - Skuhra - Weise &
Partner GbR
Patent- und Rechtsanwälte
Friedrichstrasse 31
80801 München (DE)

(54) **Method and device for modulating signals**

(57) A method and device for modulating signals are disclosed. The method includes: receiving a signal after channel coding, and determining the number of constellation points **N** of the signal within an equal probability mapping interval $[r_{i-1}, r_i]$; if a modulated output complies with Gaussian distribution, obtaining the end point value $r_i$ according to the distribution function of the modulated output, the **N**, and the total number of constellation points **M**; and obtaining the amplitude $y_i$ of constellation points according to the $r_i$, the distribution function of the modulated output, and the **M**, so as to modulate the signal after channel coding. With the present invention, it can be guaranteed that the system performance is closer to the channel capacity in modulation modes such as Pulse Amplitude Modulation (PAM) and Quadrature Amplitude Modulation (QAM) when the modulated output complies with Gaussian distribution.

Receive a signal after channel coding and determine the number of constellation points "N" of the signal after channel coding within the equal probability mapping interval [ri-1, ri] — 11

If the modulated output complies with Gaussian distribution, obtain the end point value according to the distribution function of the modulated output, the N, and the total number of constellation points "M" — 12

Obtain the amplitude of the constellation points according to the end point value, the distribution function of the modulated output, and the M, so as to modulate the signal after channel coding — 13

FIG. 1

EP 2 222 043 A2

**Description**

**Field of the Invention**

The present invention relates to a signal processing technology, and in particular, to a method and device for modulating signals.

**Background of the Invention**

The channel capacity refers to the maximum rate at which information can be transmitted through a physical transmission channel. On an Additive White Gaussian Noise (AWGN) channel, the system transmission rate can reach the channel capacity if the length of the input signal is infinite and complies with the Gaussian distribution.

In a current communication system, regular modulation modes are used, such as Phase Shift Keying (PSK), Pulse Amplitude Modulation (PAM), and Quadrature Amplitude Modulation (QAM). All these modulation modes adopt very regular constellations which feature equal probability, evenness and equal distance. Outputs modulated in these modes feature even distribution.

During the implementation of the present invention, the inventor discovers at least the following problems: The input signal must comply with the Gaussian distribution if the system transmission rate needs to reach the channel capacity, but the evenly distributed modulated outputs in the prior art cause a big difference between the system performance and the channel capacity.

**Summary of the Invention**

Embodiments of the present invention provide a method and device for modulating signals to overcome the big difference between the system performance and the channel capacity caused by the evenly distributed modulated outputs in the prior art.

A method for modulating signals in an embodiment of the present invention includes:

receiving a signal after channel coding, and determining the number of constellation points **N** of the signal after channel coding within an equal probability mapping interval $[r_{i-1}, r_i]$;
obtaining an end point value $r_i$ of the equal probability mapping interval according to a distribution function of the modulated output, the number of constellation points **N**, and the total number of constellation points **M**, if a modulated output complies with Gaussian distribution; and
obtaining an amplitude $y_i$ of the constellation points according to the $r_i$, the distribution function of the modulated output, and the **M**, so as to modulate the signal after channel coding.

A device for modulating signals in an embodiment of the present invention includes:

an obtaining module, connected to a determining module and adapted to: obtain an end point value $r_i$ of an equal probability mapping interval according to a distribution function of the modulated output, an **N**, and the total number of constellation points **M**, if a modulated output complies with Gaussian distribution; and
a shaping module, connected to the obtaining module and adapted to obtain an amplitude $y_i$ of the constellation points according to the $r_i$, the distribution function of the modulated output, and the **M**, so as to modulate the signal after channel coding.

According to the preceding technical solution, in embodiments of the present invention, the location information of constellation points is obtained if the modulated output complies with Gaussian distribution. Thus, it can be guaranteed that the system performance is closer to the channel capacity when the modulated output complies with Gaussian distribution.

**Brief Description of the Drawings**

FIG. 1 is a flowchart of a method according to a first embodiment of the present invention;
FIG. 2 is a flowchart of a method according to a second embodiment of the present invention;
FIG. 3 is a flowchart of a method according to a third embodiment of the present invention;
FIG. 4 illustrates a first constellation mapping of the constellation distribution obtained by using the method according to the third embodiment of the present invention;

FIG. 5 illustrates a second constellation mapping of the constellation distribution obtained by using the method according to the third embodiment of the present invention;

FIG. 6 illustrates a third constellation mapping of the constellation distribution obtained by using the method according to the third embodiment of the present invention; and

FIG. 7 shows a structure of a device in a fourth embodiment of the present invention.

**Detailed Description of the Embodiments**

The present invention is hereinafter described in detail with reference to some embodiments and the accompanying drawings.

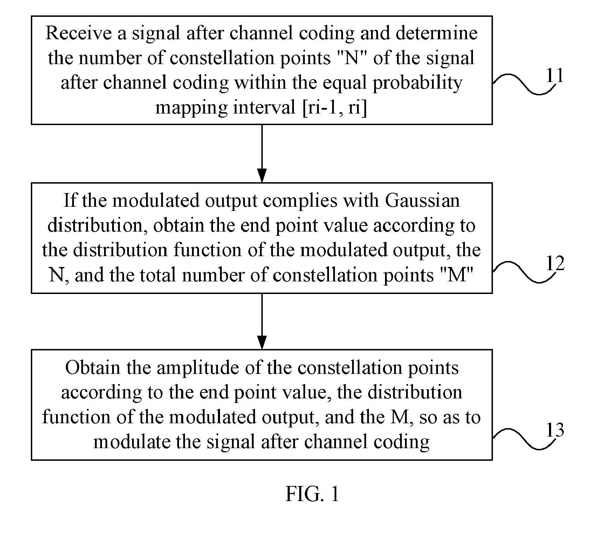

FIG. 1 is a flowchart of a method according to the first embodiment of the present invention. The method includes the following steps:

Step 11: The signal modulation device receives a signal after channel coding, and determines the number of constellation points **N** of the signal after channel coding within an equal probability mapping interval [$r_{i-1}$,$r_i$]. When a signal is sent from the source end, the signal usually undergoes signal source encoding, channel encoding, and modulation. To ensure that the system performance can reach the channel capacity, the modulated signal must comply with the Gaussian distribution.

Step 12: If the modulated output complies with Gaussian distribution, the signal modulation device obtains an end point value $r_i$ of the equal probability mapping interval according to the distribution function of the modulated output, the **N**, and the total number of constellation points **M**. In this embodiment, the signal is modulated if the modulated output complies with Gaussian distribution. Thus, it can be guaranteed that the system capacity is closer to the channel capacity.

Step 13: The signal modulation device obtains the amplitude $y_i$ of the constellation points according to the $r_i$, the distribution function of the modulated output, and the **M**, so as to modulate the signal after channel coding.

In this embodiment, the location information of constellation points is obtained if the modulated output complies with Gaussian distribution. Thus, it can be guaranteed that the system performance is closer to the channel capacity in the preceding modulation modes (for example, PSK, PAM, and QAM) when the modulated output complies with Gaussian distribution.

The following describes the preceding process by taking the one-dimensional PAM mode and two-dimensional QAM mode as examples.

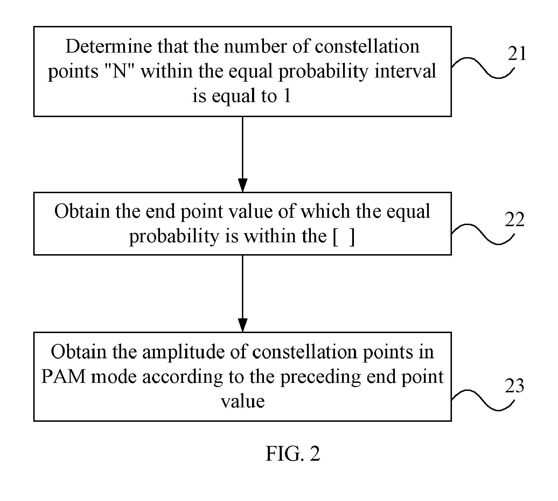

FIG. 2 is a flowchart of a method according to the second embodiment of the present invention. This embodiment takes the PAM mode as an example. As shown in FIG. 2, the method includes the following steps:

Step 21: Determine that the number of constellation points **N** within the [$r_{i-1}$,$r_i$] is equal to 1. Because the PAM is a one-dimensional modulation mode, the number of constellation points is 1 within the [$r_{i-1}$,$r_i$], where $i = 1, 2, \cdots, \dfrac{M}{2}$; and the **M** indicates the total number of constellation points. For example, the **M** is equal to 8 when the 8PAM mode is used.

Step 22: Obtain the $r_i$ within the [$r_{i-1}$,$r_i$] of which the equal probability is $\dfrac{1}{M}$. If the modulated output complies with standard Gaussian distribution, which means the probability density function of the modulated output x is

$$\mathrm{pdf}(x) = \frac{1}{\sqrt{2\pi}} \exp(-\frac{x^2}{2}),$$ the $r_i$ within the [$r_{i-1}$,$r_i$] is obtained.

Because each constellation point may occur at the same probability in PAM mode,

$$\int_{r_{i-1}}^{r_i} \mathrm{pdf}(x)dx = \frac{1}{M}, \quad r_0 = 0, r_{M/2} = +\infty .$$

According to this formula and $pdf(x) = \frac{1}{\sqrt{2\pi}} \exp(-\frac{x^2}{2})$,

$$r_i = \sqrt{2} \, \mathrm{erfinv}(\frac{2i}{M}), \quad i = 1,2,\cdots,\frac{M}{2} ;$$

In the above formula, the erfinv (*) indicates an inverse error function and is an inverse function of the error function erf (*). The expression of the erf (*) is as follows: $erf(x) = \frac{2}{\sqrt{\pi}} \int_0^x \exp(-t^2)dt$.

Step 23: Obtain the amplitude of the constellation points in case of PAM according to the preceding value $r_i$. The calculation formula is as follows:

$$y_i = \pm \sqrt{M \int_{r_{i-1}}^{r_i} x^2 pdf(x)dx}, \quad i = 1,2,\cdots,\frac{M}{2} ;$$

In the above formula, the $y_i$ indicates the amplitude of the $i^{th}$ constellation point.
This embodiment takes the one-dimensional PAM mode as an example. Because the modulated output complies with Gaussian distribution, the system that undergoes the PAM can reach the channel capacity.

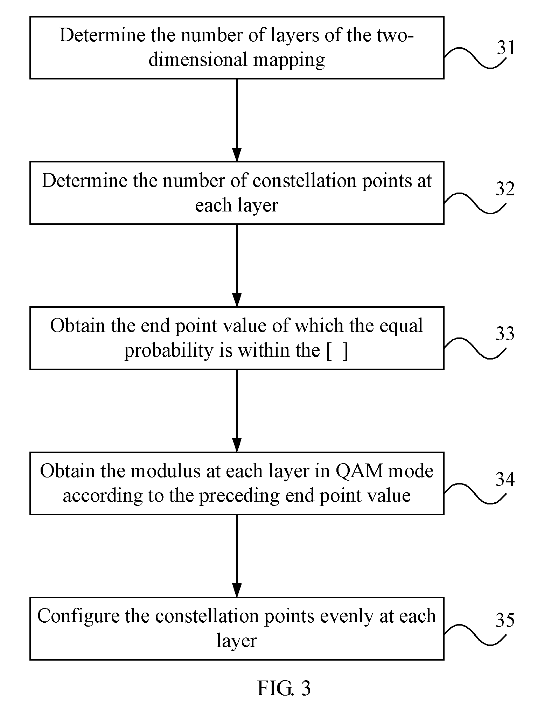

FIG. 3 is a flowchart of a method according to the third embodiment of the present invention. This embodiment takes the QAM mode as an example. As shown in FIG. 3, the method includes the following steps:

Step 31: Determine that the number of layers of the two-dimensional mapping is $N_{circle} = \frac{\sqrt{M}}{2}$, where the **M** indicates the total number of constellation points.

Step 32: Determine that the number of constellation points within the $[r_{i-1}, r_i]$ is $N = \frac{M}{N_{circle}}$, namely, the number of constellation points at each layer. The number of constellation points at each layer may be evenly distributed. To achieve a better modulation effect, the number of constellation points at each layer is evenly distributed in this embodiment.

Step 33: Obtain the value $r_i$ within the $[r_{i-1}, r_i]$ of which the equal probability is $\frac{N}{M}$. . If the modulated output complies with Gaussian distribution, which means the probability density function of the modulated output x is

$pdf(x) = \frac{1}{\sqrt{2\pi}} \exp(-\frac{x^2}{2})$, the value $r_i$ within the $[r_{i-1}, r_i]$ is obtained.

Because each constellation point may occur at the same probability in QAM mode,

$$\int_{r_{i-1}}^{r_i} pdf(x)dx = \frac{N}{M}, \quad r_0 = 0, r_{M/2} = +\infty .$$

According to this formula and $pdf(x) = \frac{1}{\sqrt{2\pi}} \exp(-\frac{x^2}{2})$,

$$r_i = \sqrt{2}\,\text{erfinv}\!\left(\frac{2 \times N \times i}{M}\right), \quad i = 1,2,\cdots,\frac{M}{2}\,;$$

In the above formula, the erfinv (*) indicates an inverse error function and is an inverse function of the error function erf (*). The expression of the erf (*) is as follows:

$$\text{erf}(x) = \frac{2}{\sqrt{\pi}} \int_0^x \exp(-t^2)\,dt\,.$$

Step 34: Obtain the amplitude of the constellation points in case of QAM according to the preceding $r_i$ value. The calculation formula is as follows:

$$y_i = \pm\sqrt{M \int_{r_{i-1}}^{r_i} x^2 \text{pdf}(x)\,dx}\,, \quad i = 1,2,\cdots,\frac{M}{2}\,;$$

In the above formula, the $y_i$ indicates the modulus at the $i^{th}$ layer.

Step 35: Configure the constellation points evenly at each layer. That is, the **M** constellation points are divided into $N_{circle} = \dfrac{\sqrt{M}}{2}$ layers, each of which is configured with $N = \dfrac{M}{N_{circle}}$ constellation points.

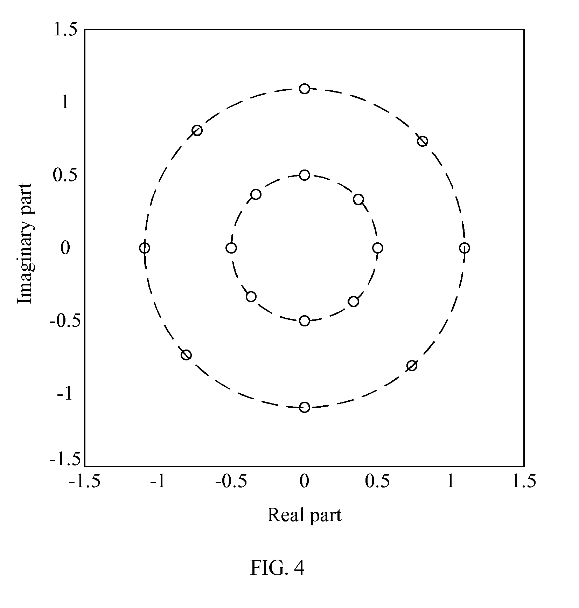

The preceding two-dimensional mapping method may be considered to be a hierarchical expansion (circular expansion) method. That is, each modulus corresponds to a layer (circle), and different layers comply with the Gaussian distribution. The number of constellation points is distributed evenly at each layer. FIG. 4 illustrates a first constellation mapping of the constellation distribution obtained by using the method according to the third embodiment of the present invention. As shown in FIG. 4, if the 16QAM mode is used, $N_{circle} = \dfrac{\sqrt{M}}{2} = 2$, and $N = \dfrac{M}{N_{circle}} = 8$. That is, this method uses a two-layer mapping, with each layer having eight constellation points.

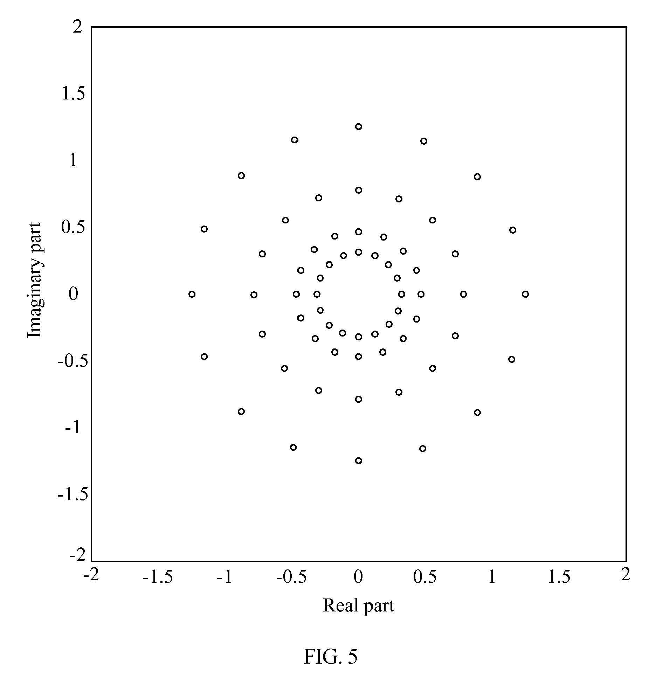

FIG. 5 illustrates a second constellation mapping of the constellation distribution obtained by using the method according to the third embodiment of the present invention. As shown in FIG. 5, if the 64QAM mode is used, $N_{circle} = \dfrac{\sqrt{M}}{2} = 4$, and $N = \dfrac{M}{N_{circle}} = 16$. That is, this method uses a four-layer mapping, with each layer having 16 constellation points.

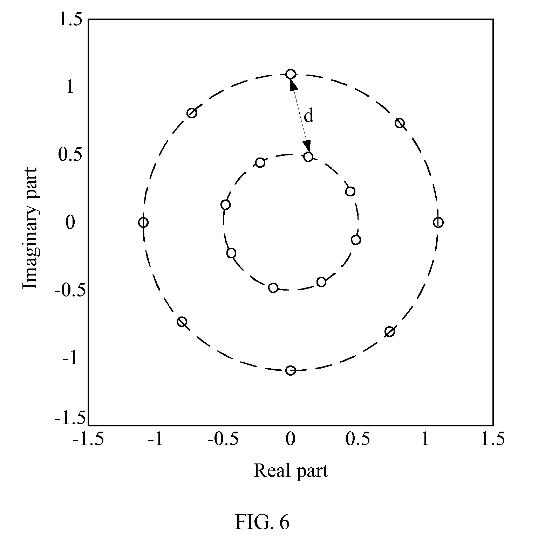

For a two-dimensional signal, the larger the number of constellation points on a modulus is, the higher the probability is. As a result, the minimum Euclidean distance (that is, the straight line distance between two constellation points) on the constellation turns smaller. According to the current specification, the larger the minimum Euclidean distance is, the better the demodulation performance is. Thus, to obtain better demodulation performance, the amplitude angle between the constellation points of each layer may be adjusted, so that the amplitude angles between the layers are different. FIG. 6 illustrates a third constellation mapping of the constellation distribution obtained by using the method according to the third embodiment of the present invention. As shown in FIG. 6, the amplitude angles between the layers are different. The minimum Euclidean distance of the constellation points between the layers may be increased to obtain better demodulation performance.

This embodiment takes the two-dimensional QAM mode as an example. Because the modulated output complies with Gaussian distribution, the system performance can reach the channel capacity.

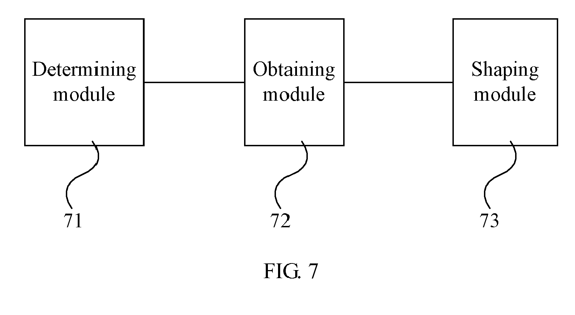

FIG. 7 shows a structure of a device according to the fourth embodiment of the present invention. The device includes a determining module 71, an obtaining module 72, and a shaping module 73. The determining module 71 is adapted to: receive a signal after channel coding, and determine the number of constellation points **N** of the signal within the equal probability mapping interval $[r_{i-1},r_i]$. The obtaining module 72 is connected to the determining module 71 and adapted to: obtain the value $r_i$ according to the distribution function of the modulated output, the **N**, and the total number of constellation points **M**, if the modulated output complies with Gaussian distribution. The shaping module 73 is connected to the obtaining module 72 and adapted to obtain the amplitude of constellation points according to the value $r_i$, the distribution function of the modulated output, and the **M**, so as to modulate the signal after channel coding.

The functions of the preceding modules may be implemented with reference to the methods provided in embodiments of the present invention.

In embodiments of the present invention, the location information of constellation points is obtained if the modulated output complies with Gaussian distribution. Thus, it can be guaranteed that the system performance is closer to the channel capacity in the preceding modulation modes when the modulated output complies with Gaussian distribution.

Those skilled in the art should understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a ROM, a RAM, a magnetic disk, or an optical disk.

Although the present invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall within the scope of protection defined by the following claims or their equivalents.

**Claims**

1. A method for modulating signals, comprising:

   receiving a signal after channel coding, and determining the number of constellation points **N** of the signal after channel coding within an equal probability mapping interval $[r_{i-1},r_i]$;
   obtaining an end point value $r_i$ of the equal probability mapping interval according to a distribution function of the modulated output, the number of constellation points **N**, and the total number of constellation points **M**, if a modulated output complies with Gaussian distribution; and
   obtaining an amplitude $y_i$ of the constellation points according to the $r_i$, the distribution function of the modulated output, and the total number of constellation points **M**, so as to modulate the signal after channel coding.

2. The method of claim 1, wherein the end point value $r_i$ is calculated by the following formula:

$$r_i = \sqrt{2}\,\mathrm{erfinv}(\frac{2 \times N \times i}{M}),\quad i = 1,2,\cdots,\frac{M}{2}\,;$$

   wherein: the $r_i$ indicates the end point value of the equal probability mapping interval; the **M** indicates the total number of constellation points; the **N** indicates the number of constellation points within the equal probability mapping interval $[r_{i-1},r_i]$; the erfinv (*) indicates an inverse function of erf (*); and the erf (*) expression is

$$\mathrm{erf}(x) = \frac{2}{\sqrt{\pi}} \int_0^x \exp(-t^2)dt\,.$$

3. The method of claim 1, wherein the amplitude $y_i$ of the constellation points is calculated by the following formula:

$$y_i = \pm\sqrt{M\int_{r_{i-1}}^{r_i} x^2 \mathrm{pdf}(x)dx}\,,\quad i = 1,2,\cdots,\frac{M}{2}\,;$$

wherein: the $y_i$ indicates the amplitude of the $i^{th}$ constellation point; the **M** indicates the total number of constellation points; the $r_i$ indicates the end point value of the equal probability mapping interval; and the pdf (x) indicates the distribution function of Gaussian distribution, the expression of which is $pdf(x) = \dfrac{1}{\sqrt{2\pi}} \exp(-\dfrac{x^2}{2})$.

4. The method of claim 1, wherein when a one-dimensional modulation mode is used, the step of determining the **N** within the $[r_{i-1}, r_i]$ comprises: determining the **N** to be 1.

5. The method of claim 1, wherein when a two-dimensional modulation mode is used, the step of determining the **N** within the $[r_{i-1}, r_i]$ comprises:

   determining the number of layers $N_{circle}$ of a constellation according to the **M**; and
   obtaining the **N** according to the **M** and the $N_{circle}$.

6. The method of claim 5, wherein the $N_{circle}$ is calculated by the following formula: $N_{circle} = \dfrac{\sqrt{M}}{2}$, wherein the $N_{circle}$ indicates the number of layers of the constellation and the **M** indicates the total number of constellation points.

7. The method of claim 5, wherein the **N** is calculated by the following formula: $N = \dfrac{M}{N_{circle}}$.

8. The method of claim 5, further comprising: setting **N** constellation points at each layer of the constellation, wherein the constellation points between the layers have different amplitude angles.

9. A device for modulating signals, comprising:

   a determining module, adapted to: receive a signal after channel coding, and determine the number of constellation points **N** of the signal after channel coding within an equal probability mapping interval $[r_{i-1}, r_i]$;
   an obtaining module, connected to the determining module and adapted to: obtain an end point value $r_i$ of the equal probability mapping interval according to a distribution function of the modulated output, the number of constellation points **N**, and the total number of constellation points **M**, if a modulated output complies with Gaussian distribution; and
   a shaping module, connected to the obtaining module and adapted to: obtain the amplitude $y_i$ of the constellation points according to the $r_i$, the distribution function of the modulated output, and the total number of constellation points **M**, so as to modulate the signal after channel coding.

10. The device of claim 9, wherein:

   when a one-dimensional modulation mode is used, the determining module is adapted to determine that the **N** within the $[r_{i-1}, r_i]$ is equal to 1; and
   when a two-dimensional modulation mode is used, the determining module is adapted to: determine the number of layers $N_{circle}$ of a constellation according to the total number of constellation points **M**, and obtain the number of constellation points **N** according to the total number of constellation points **M** and the number of layers $N_{circle}$.

Receive a signal after channel coding and determine the number of constellation points "N" of the signal after channel coding within the equal probability mapping interval [ri-1, ri] — 11

If the modulated output complies with Gaussian distribution, obtain the end point value according to the distribution function of the modulated output, the N, and the total number of constellation points "M" — 12

Obtain the amplitude of the constellation points according to the end point value, the distribution function of the modulated output, and the M, so as to modulate the signal after channel coding — 13

FIG. 1

Determine that the number of constellation points "N" within the equal probability interval is equal to 1  21

Obtain the end point value of which the equal probability is within the [  ]  22

Obtain the amplitude of constellation points in PAM mode according to the preceding end point value  23

FIG. 2

Determine the number of layers of the two-dimensional mapping — 31

Determine the number of constellation points at each layer — 32

Obtain the end point value of which the equal probability is within the [ ] — 33

Obtain the modulus at each layer in QAM mode according to the preceding end point value — 34

Configure the constellation points evenly at each layer — 35

FIG. 3

FIG. 4

FIG. 5

FIG. 6

| Determining module | Obtaining module | Shaping module |
|---|---|---|

71

72

73

FIG. 7